# FASCICULE DE BREVET EUROPEEN

(11) **EP 0 593 381 B1**
(45) Date de publication et mention de la délivrance du brevet: **07.01.1998**
(21) Numéro de dépôt: 93450008.3
(22) Date de dépôt: 12.10.1993
(51) Int. Cl.: B29C 53/60, D04H 3/04

(54) **Procédé de dépose filamentaire sur une surface axisymétrique convexe, dispositif pour sa mise en oeuvre et structure ainsi obtenue**
Verfahren zur Filamentablagerung auf einer achsensymemetrischen konvexen Fläche, Vorrichtung zu deren Herstellung und herstellte Form
Process for laying filaments on axesymmetrical convex surface, device for manufacturing and structure thus obtained

(30) Priorité: 15.10.1992 FR 9212617
(43) Date de publication de la demande: 20.04.1994
(73) Titulaire: AEROSPATIALE Société Nationale Industrielle, 75781 Paris Cédex 16 (FR)
(72) Inventeur: Mathieu, Gérard, Résidence Louqsor Appartement 23, F-31000 Toulouse (FR); Monget, François, F-33700 Merignac (FR)
(74) Mandataire: Thébault, Jean-Louis

(56) Documents cités:
- EP-A- 0 032 858
- DE-B- 1 235 777
- FR-A- 1 414 309
- FR-A- 2 038 524
- FR-A- 2 575 966
- US-A- 4 053 081

## Description

La présente invention a trait à la réalisation de structures bombées constituées d'une enveloppe, notamment hémisphérique, revêtue extérieurement de fibres résistantes enrobées ou non d'un liant durcissable.

L'invention s'applique plus précisément, bien que non exclusivement, à la réalisation de récipients de stockage de fluide sous pression, en particulier des récipients dits "bouteilles" de stockage de gaz, tel que de l'air, de l'oxygène, de l'azote, du gaz carbonique, utilisés dans différents secteurs industriels. Ce type de récipient comprend une virole cylindrique centrale prolongée à chaque extrémité d'un fond bombé, généralement hémisphérique, l'ensemble étant fretté à l'aide de fibres résistantes enrobées d'un liant durcissable.

L'un des fonds comporte en son centre un trou de passage, en sorte que le frettage des extrémités de la bouteille est réalisé en pratiquant une réserve sur la partie sommitale des deux hémisphères des fonds.

La technique actuelle de dépose filamentaire utilisée pour la réalisation d'une telle structure consiste en un simple bobinage à motif élémentaire au cours duquel le fil à déposer passe une seule fois sur la calotte hémisphérique, le passage étant répété avec un léger décalage angulaire autant de fois que la couche comporte de fils et sans interruption.

L'inconvénient de cette technique est l'accumulation à la périphérie du trou de l'un des fonds et de la zone morte correspondante de l'autre fond, du fil qui forme ainsi un "bourrelet", ce qui ne donne pas une épaisseur constante au frettage de ces parties d'extrémité des bouteilles.

Les documents FR-A-1 414 309 et FR-A-2 038 524 illustre une telle technique.

Par ailleurs, le document FR-A-2 575 966 se rapporte à une technique similaire, à cette différence qu'à chaque couche les fils sont, sur les calottes bombées, tangents à un cercle de diamètre supérieur à celui du cercle tangenté par la couche précédente, ce qui permet de constituer plusieurs petits bourrelets concentriques au lieu d'un seul plus volumineux. Ce mode de mise en oeuvre n'est cependant pas pleinement satisfaisant, car des bourrelets subsistent en surface.

L'invention vise à pallier ces inconvénients en proposant une nouvelle technique de dépose filamentaire sur des surfaces bombées et particulièrement des surfaces sphériques, en vue de réaliser des structures du type bouteille au sens défini plus haut, ou, d'une manière générale, toute structure constituée d'une pièce dont la surface externe présente une géométrie axisymétrique convexe et comporte, dans la zone de l'axe de symétrie, un trou ou zone morte centré sur ledit axe, qui ne doit pas être revêtu. Une telle structure peut constituer par exemple une pièce devant résister à des contraintes thermo-mécaniques à des fins de protection thermique de corps rentrant dans l'atmosphère, ou une partie d'une structure plus importante.

L'invention a pour objet un procédé de dépose filamentaire sur une surface axisymétrique convexe, en particulier hémisphérique, munie d'un trou ou zone morte circulaire, centré sur le pôle, caractérisé en ce que :
- on définit un cercle, dit de référence, parallèle au bord externe de la surface et situé à une distance déterminée du plan dudit bord,
- on définit sur ledit cercle de référence une succession régulière de points,
- on présente le fil, ou ensemble de fils, suivant une première trajectoire sensiblement géodésique, sur ladite surface, à partir dudit bord externe jusqu'en un premier point dudit cercle de référence, dénommé point de départ,
- on dépose le fil, à partir dudit point de départ, jusqu'en un deuxième point dudit cercle de référence, dénommé point d'arrivée, suivant une deuxième trajectoire sensiblement géodésique,
- on dépose le fil au delà dudit point d'arrivée jusqu'audit bord externe, suivant une troisième trajectoire sensiblement géodésique,
- on reproduit le même processus de dépose en passant par un deuxième point de départ et par un deuxième point d'arrivée, tous deux sur ledit cercle,
- on répète une telle dépose au maximum autant de fois qu'il est possible de le faire sans croiser, au moins dans la zone proche dudit trou ou zone morte, les fils déposés, en sorte de déposer un ensemble de fils appelés nappe, puis,
- on répète un même processus de dépose de nappe par décalage successif jusqu'à ce que chaque point dudit cercle de référence soit, à la fois et une seule fois, un point de départ et un point d'arrivée, en sorte d'obtenir une couche et,
- éventuellement, on recommence le processus ci-dessus jusqu'à l'obtention de l'épaisseur désirée.

Un tel procédé permet d'effectuer sur la surface axisymétrique convexe une dépose géodésique des fils. Par dépose géodésique d'un fil on entend un dépôt tel qu'en chaque point du fil la normale principale coïncide avec la normale à la surface de dépose, avec une épaisseur sensiblement constante depuis le trou ou zone morte jusqu'au voisinage du cercle d'inflexion de la trajectoire des fils, défini par lesdits points de départ et d'arrivée.

Au cours de la dépose d'une nappe, au sens défini plus haut, les fils peuvent être déposés tous d'un même côté du trou ou de la zone morte, ou de part et d'autre de ce dernier, cette seconde manière permettant une meilleure répartition des surépaisseurs dues au croisement des fils des nappes superposées.

On peut également faire varier le motif de dépose des nappes constituant une couche au sens défini plus haut, d'une couche à une autre, afin d'obtenir un profil d'épaisseur évolutif.

Entre deux couches superposées, ou entre chaque couche, on peut également effectuer une dépose de fil par bobinage simple au sens défini dans le préambule.

De même, la dépose selon l'invention peut être complétée par un piquage introduisant des fils suivant une troisième direction orthogonale localement aux directions de dépose selon l'invention.

L'invention a également pour objet un dispositif pour la mise en oeuvre du procédé ci-dessus, caractérisé en ce qu'il est constitué d'une série d'aiguilles ou analogues, implantées en saillie sur la surface à recouvrir, le long dudit cercle de référence, de préférence à égale distance les unes des autres, et définissant lesdits points de départ et d'arrivée entre lesquels le fil, ou l'ensemble de fils, est, à l'aide d'une machine de bobinage de type connu, déposé géodésiquement.

L'invention a enfin pour objet toute structure revêtue conformément au procédé.

D'autres caractéristiques et avantages de la technique de l'invention ressortiront de la description qui va suivre d'un mode de mise en oeuvre du procédé défini ci-dessus, description donnée à titre d'exemple uniquement et en référence aux dessins annexés sur lesquels :
- Figure 1 est une vue en bout d'une surface hémisphérique revêtue d'une première nappe déposée conformément à un mode de mise en oeuvre du procédé de l'invention ;
- Figure 2 est une vue en perspective de la surface de la figure 1 ;
- Figure 3 représente la surface de la figure 1 revêtue de trois nappes, et
- Figure 4 est une vue en perspective de la surface de la figure 3.

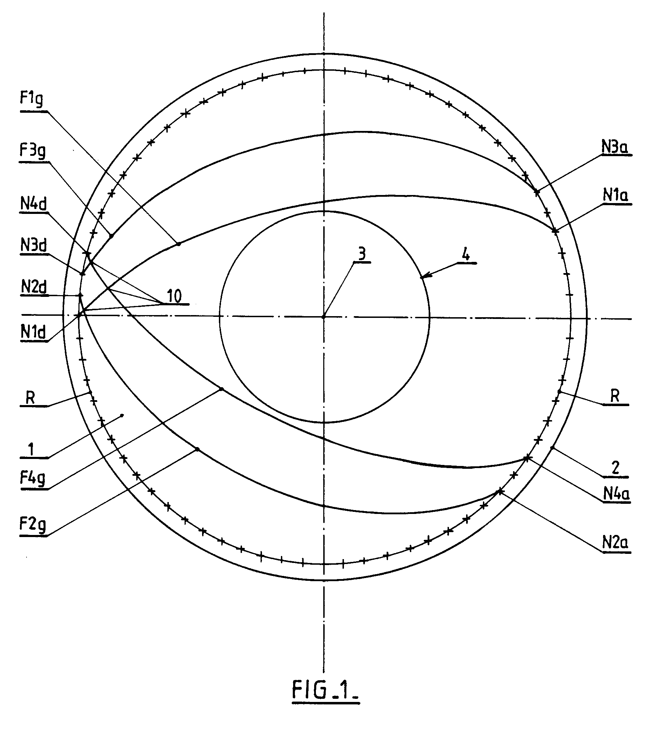

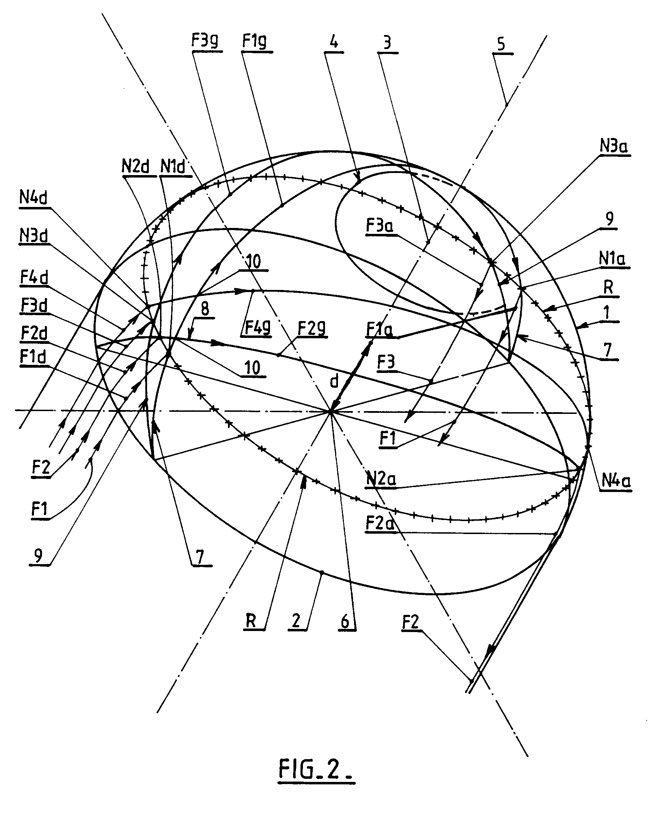

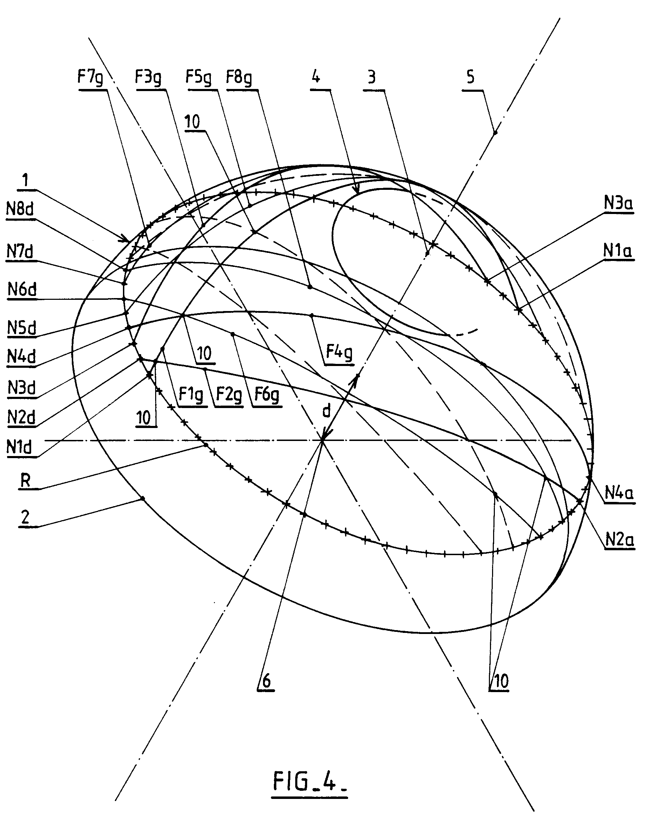

Sur les figures 1 à 4, on a représenté en 1 une surface hémisphérique avec son bord externe matérialisé par l'équateur 2, son pôle 3, un trou ou zone morte circulaire 4 centré sur le pôle 3 et qui ne doit pas être revêtu, l'axe 5 passant par le pôle 3 et le centre 6 de ladite surface hémisphérique 1.

Un fil constitué de plusieurs filaments continus et groupés est déposé sur la surface hémisphérique 1 par passages successifs.

On désigne par F1 le premier passage, le fil étant présenté sur l'équateur 2 suivant sensiblement une génératrice du cylindre prolongeant la demi-sphère 1.

Le fil F1, conformément au procédé de l'invention, est déposé sur la surface 1 sensiblement suivant un méridien (tronçon F1d) jusqu'en un point N1d, dit premier point de départ appartenant à la nappe N°1, se trouvant sur un cercle R, dit cercle de référence, défini par l'intersection de la surface 1 avec un plan parallèle à l'équateur 2 et situé à une distance d du plan équatorial.

A partir du point N1d le fil F1 est déposé (tronçon F1g) sur la calotte délimitée par le cercle R, le long d'un arc de grand cercle 7 de la surface 1, jusqu'en un point d'arrivée N1a du cercle R, qui est déterminé en sorte que ledit tronçon F1g, la référence g indiquant qu'il s'agit d'une dépose géodésique, soit tangent au trou ou cercle 4, ou à très faible distance de celui-ci.

Entre le cercle R et l'équateur 2, le fil F1 est déposé sensiblement suivant un méridien de la surface 1 (tronçon F1a) puis, au-delà de l'équateur 2, le fil F1 est sensiblement parallèle à l'axe 5.

Au passage suivant F2 du fil, celui-ci est déposé suivant sensiblement un méridien (tronçon F2d), entre l'équateur 2 et le cercle R, jusqu'en un point N2d de ce dernier, situé à proximité du point N1d.

A partir du point N2d, le fil F2 est déposé (tronçon F2g) sur la calotte délimitée par le cercle R, le long d'un arc de grand cercle 8 de la surface, jusqu'en un point d'arrivée N2a du cercle R.

Au delà du point N2a, le fil est déposé suivant sensiblement un méridien (tronçon F2a) jusqu'à l'équateur 2 et, ensuite, le fil F2 est sensiblement parallèle à l'axe 5.

Il est à noter que dans le mode de mise en oeuvre illustré par les figures 1 à 4, le point d'arrivée N2a choisi pour le fil F2 est, par rapport à un plan contenant l'axe 5 et le tronçon F2d, du côté opposé au point N2a, en sorte que le tronçon F2g contourne le trou ou cercle 4 par l'autre côté par rapport au tronçon F1g.

Par ailleurs, l'emplacement du point N2a sur le cercle R est choisi en sorte d'éloigner sensiblement le tronçon de fil F2g du trou ou cercle 4.

On pourrait bien entendu choisir un autre point par exemple pour rapprocher le tronçon F2g du trou ou cercle 4.

Au troisième passage du fil (fil F3), celui-ci est déposé, comme aux autres passages, suivant sensiblement un méridien (F3d), jusqu'en un point de départ N3d sur le cercle R.

Au-delà du cercle R, le fil est déposé suivant un arc de grand cercle 9 (tronçon F3g) jusqu'en un point N3a du cercle R, situé à une distance du point N1a égale à celle entre les points N1d et N3d, et du côté du cercle R ne faisant pas se croiser les tronçons F1g et F3g.

Au-delà du point N3a, le fil suit sensiblement un méridien (tronçon F3a) comme pour les passages précédents.

Dans le mode de mise en oeuvre illustré par les figures 1 à 4, la dépose du tronçon F3g est symétrique de celle du tronçon F2g par rapport à un plan contenant l'axe 5 et passant à égale distance des points N2d et N3d.

Enfin, au quatrième passage (fil F4), on suit le même processus avec un point de départ N4d et un point d'arrivée N4a sur le cercle R, le tronçon de dépose géodésique F4g étant disposé symétriquement au tronçon F1g par rapport au plan défini ci-dessus.

Les tronçons F1g à F4g constituent une nappe, c'est à dire un ensemble de fils qu'il est possible de déposer sur la calotte sphérique délimitée par le cercle R, sans croiser les fils, au moins dans la zone de la calotte la plus proche du trou ou cercle 4. Si, dans l'illustration donnée sur les figures les tronçons F1g à F4g se croisent en 10, c'est dans une bande de la calotte proche du cercle R.

De préférence, une nappe regroupera le maximum de fils que l'on peut déposer géodésiquement sans croisement dans la zone proche du trou ou cercle 4.

Les points de départ N1d à N4d, ainsi que les points d'arrivée N1a à N4a, font partie d'une série de points régulièrement distribués le long du cercle R et dont le nombre est, de préférence, un multiple du nombre de fils par nappe.

Dans le mode de réalisation illustré, le cercle R est divisé en soixante douze points.

En considérant qu'une couche sera obtenue lorsque chacun des soixante douze points (N1d, N2d, N3d, N4d, etc...) aura été, successivement et jusqu'au retour au point d'origine N1d, l'objet d'un départ de dépose sur la calotte, il faudra donc déposer dix-huit nappes telles que la nappe N1 regroupant les tronçons F1g à F4g.

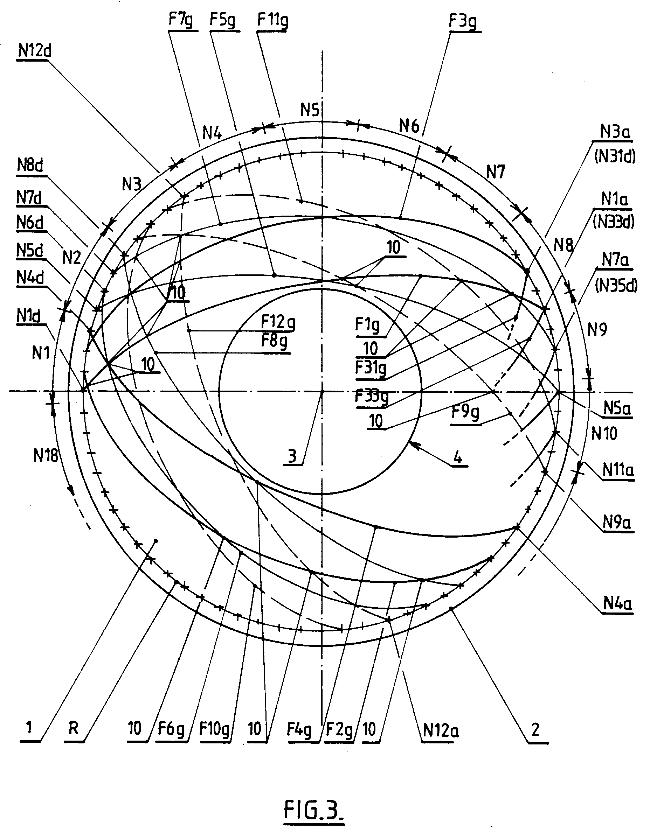

On a représenté sur la figure 3 les neuf premières nappes N1 à N9, identifiées par leurs points de départ sur le cercle R, lesquels couvrent la moitié du cercle R. Il est à noter que pour les nappes N°8 et N°9 certains des points de départ vont se confondre avec des points d'arrivée des nappes N°1 et N°2. C'est le cas, par exemple, des points de départ N31d, N33d et N35d qui sont confondus respectivement avec les points d'arrivée N3a, N1a et N7a.

En ces points, à la fois de départ et d'arrivée, les deux fils des tronçons déposés sur la calotte sont disposés, l'un, d'un côté du trou ou cercle 4 et, l'autre, de l'autre côté, comme illustré par exemple sur la figure 3 par les tronçons F3g, F31g et F1g, F33g.

De même, certains des fils déposés sur la calotte à partir de points de départ des nappes N8,N9, atteignent des points d'arrivée qui sont confondus avec certains des points N1d à N8d, les fils en question étant, en ces points, également disposés en opposition avec les tronçons de fils F1g à F8g par rapport au trou ou cercle 4.

Lorsque les nappes N10 à N18 auront été déposées, en sorte de constituer une couche au sens défini plus haut, tous les points susdits du cercle R seront, à la fois et une seule fois, point de départ et point d'arrivée.

Les nappes successives N1 à N18 sont déposées de préférence suivant le même motif, les fils étant, pour chaque nappe, placés de part et d'autre du trou ou cercle 4, comme illustré par exemple par les tronçons F5g, F7g et F6g, F8g pour la nappe N2 et par les tronçons F9g, F11g et F10g, F12g pour la nappe N3.

Une telle couche ne présente pas de bourrelet annulaire à proximité du trou ou cercle 4, car le mode de dépose permet de répartir, sur toute l'étendue de la calotte sphérique recouverte, les croisements 10 des fils, comme on peut l'observer sur la figure 3.

Ainsi, non seulement la dépose des fils sur la calotte est géodésique, ce qui assure une bonne stabilité des fils, mais les croisements de fils sont régulièrement distribués sur une large surface, conférant de la sorte à la couche une épaisseur bien plus régulière.

L'épaisseur désirée du revêtement, au droit de la surface sphérique 1, est obtenue en réalisant le nombre de couches approprié.

Au lieu, pour chaque nappe de quatre fils (F1g à F4g ; F5g à F8g ; F9g à F12g), d'effectuer une dépose alternée de deux fils d'un côté du trou 4 et deux de l'autre, on pourrait déposer les quatre fils d'un même côté du trou ou cercle 4, toujours suivant des arcs de grand cercle.

La dépose alternée telle qu'illustrée permet d'obtenir une couche plus épaisse et une structure fibrée plus régulière, mais moins dense, car il y a plus de croisements de fils qu'avec une dépose d'un même côté du trou ou cercle 4.

Par ailleurs, dans une même nappe, on peut ne pas respecter l'ordre croissant des points définis sur le cercle R et déposer, par exemple, les fils de la nappe N1 en commençant par n'importe lequel des quatre points de départ N1d à N4d, puis, au deuxième passage, en passant par n'importe lequel des trois points de départ restants et ainsi de suite.

Avantageusement, on réalisera les diverses couches avec un décalage angulaire mutuel afin d'homogénéiser la structure fibrée.

Ce décalage mutuel est par exemple obtenu en prenant comme premier point de départ de la première nappe de la seconde couche, non plus le point N1d des figures 1 à 4, mais le point immédiatement suivant N2d. Ceci évite de superposer les nappes de même rang, d'une couche à la suivante.

Ce décalage peut aussi être obtenu en inversant le sens de dépose des nappes de la couche suivante, c'est-à-dire en partant dans le sens anti-horaire sur le cercle R, alors que dans le mode illustré par les figures 1 à 4, la dépose des nappe successives N1 à N18 se fait dans le sens horaire le long dudit cercle R.

Le motif de dépose des nappes de chaque couche peut éventuellement changer en vue d'obtenir un profil d'épaisseur désiré.

En outre, un bobinage classique inter-couche peut être réalisé, de même qu'il est possible d'effectuer par piquage, par exemple conformément aux enseignements du document FR-2.612.950 au nom de la Demanderesse, l'insertion d'un fil dans l'épaisseur (troisième direction) de la structure fibrée.

La distance d entre les plans du cercle R et de l'équateur 2 peut varier. Elle ne doit cependant pas être trop faible, car ceci aurait comme conséquence une tendance à la concentration des croisements de fils dans un bande annulaire proche du cercle R. La distance d ne doit pas non plus être trop grande, car ceci conduirait à accroître la zone annulaire, entre le cercle R et l'équateur 2, recouverte de fils déposés suivant des méridiens.

Le changement de direction ou d'inflexion de la trajectoire des fils aux niveaux des points de départ et d'arrivée sur le cercle R est réalisé par exemple à l'aide d'épingles implantées radialement dans la surface 1, à hauteur des points N1d, N2d ; N1a, N2a.

De telles épingles permettent facilement la dépose d'un fil, d'un côté ou de l'autre de chaque aiguille, pour donner au fil la direction désirée, d'un côté ou de l'autre du trou ou cercle 4.

Une telle technique d'implantation d'aiguilles et de bobinage à partir d'un tel jeu d'aiguilles est bien connue en soi et illustrée par exemple par le document FR 2 612 950 cité plus haut.

Après mise en place des fils, les épingles sont retirées, ou bien laissées en place. On peut aussi utiliser des épingles fusibles.

Dans l'exemple de dépose donné ci-dessus, on a défini, pour faciliter la compréhension, des points de départ et des points d'arrivée sur ledit cercle de référence R, mais il est évident que l'on aurait tout aussi bien pu procéder à une dépose inverse, c'est-à-dire en partant des points dénommés plus haut points d'arrivée sur le cercle R et éloignés les uns des autres, pour atteindre les points dénommés plus haut points de départ et disposés à la suite.

Le procédé de l'invention permet de fabriquer des "bouteilles" au sens défini plus haut, comprenant une virole centrale et deux fonds hémisphériques comportant chacun une réserve de revêtement, circulaire, centrée sur le pôle et correspondant, pour l'un des fonds, à l'orifice de la bouteille.

Les deux fonds présentent une épaisseur sensiblement constante le long d'un méridien, sans bourrelet sur le pourtour de la réserve centrale.

La virole et les deux fonds sont avantageusement bobinés en même temps, le fil déposé sur les fonds, conformément à l'invention, définissant une ou plusieurs couches de fils déposés longitudinalement sur la virole, en sorte de constituer un tramage qui est ensuite recouvert d'un bobinage circonférenciel, à partir du même fil, uniquement au droit de la virole.

D'une manière générale, le procédé de l'invention permet de réaliser le revêtement de toute surface axisymétrique convexe, quelles que soient la nature et la destination de l'objet ainsi revêtu, qu'il forme un tout en lui-même ou soit une partie d'un objet plus important.

Enfin, l'invention n'est évidemment pas limitée aux modes de réalisation représentés et décrits ci-dessus mais en couvre au contraire toutes les variantes, notamment en ce qui concerne le nombre de fils déposés par nappe, le mode de dépose, alterné ou non, des fils d'une même nappe, le nombre de nappes pour former une couche de revêtement au sens défini plus haut, le nombre et le motif de dépose des nappes constituant une couche, ainsi que la nature des moyens aptes à infléchir, au niveau du cercle de référence R, la direction de dépose des fils.

Le fil utilisé, constitué de filaments longitudinaux en nombre plus ou moins important, peut être du fil de verre, de carbone, de "Kevlar", d'alumine, de bore , etc..., pré-imprégné ou non.

Il est à noter, par ailleurs, que chaque fil peut être constitué par un ensemble de fils, sous forme de ruban ou bande.

La structure fibrée ainsi déposée peut être ensuite imprégnée, densifiée, etc...

## Revendications

1. Procédé de dépose filamentaire sur une surface axisymétrique convexe, en particulier hémisphérique (1), munie d'un trou ou zone morte circulaire (4), centré sur le pôle (3), caractérisé en ce que :
- on définit un cercle (R), dit de référence, parallèle au bord externe (2) de la surface et situé à une distance déterminée (d) du plan dudit bord,
- on définit sur ledit cercle de référence (R) une succession régulière de points,
- on présente le fil, ou ensemble de fils, suivant une première trajectoire sensiblement géodésique (F1d), sur ladite surface, à partir dudit bord externe (2) jusqu'en un premier point dudit cercle de référence (R), dénommé point de départ (N1d),
- on dépose le fil, à partir dudit point de départ (N1d), jusqu'en un deuxième point dudit cercle de référence (R), dénommé point d'arrivée (N1a), suivant une deuxième trajectoire sensiblement géodésique (F1g),
- on dépose le fil au delà dudit point d'arrivée (N1a), jusqu'audit bord externe (2), suivant une troisième trajectoire sensiblement géodésique (F1a),
- on reproduit le même processus de dépose en passant par un deuxième point de départ (N2d) sur ledit cercle (R) et par un deuxième point d'arrivée (N2a),
- on répète une telle dépose au maximum autant de fois qu'il est possible de le faire sans croiser, au moins dans la zone proche dudit trou ou zone morte (4), les fils déposés (F1g à F4g), en sorte de déposer un ensemble de fils appelés nappe (N1), puis,
- on répète un même processus de dépose de nappe par décalage successif jusqu'à ce que chaque point dudit cercle de référence (R) soit, à la fois et une seule fois, un point de départ et un point d'arrivée, en sorte d'obtenir une couche et,
- éventuellement, on recommence le processus ci-dessus jusqu'à l'obtention de l'épaisseur désirée.

2. Procédé suivant la revendication 1, caractérisé en ce qu'au cours de la dépose d'une nappe (N1), les fils (F1g à F4g) sont disposés de part et d'autre du trou ou zone morte (4).

3. Procédé suivant la revendication 1, caractérisé en ce qu'au cours de la dépose d'une nappe, les fils sont disposés d'un même côté du trou ou zone morte (4).

4. Procédé suivant l'une des revendications 1 à 3, caractérisé en ce que les points de départ de chaque nappe (N1 à N18) d'une couche sont pris dans un groupe de points successifs le long dudit cercle de référence (R), lesdits points de départ étant choisis, à l'intérieur du groupe, dans n'importe quel ordre.

5. Procédé suivant la revendication 4, caractérisé en ce que, d'une couche à la suivante, le point de départ (N1d) de la première nappe (N1) est décalé angulairement par rapport à celui de la première nappe de la couche précédente.

6. Procédé suivant la revendication 4, caractérisé en ce que, d'une couche à la suivante, le point de départ (N1d) de la première nappe (N1) est le même que celui de la première nappe de la couche précédente et les nappes de la couche suivante sont déposées dans le sens inverse du sens de dépose des nappes de la couche précédente.

7. Procédé suivant l'une des revendications 1 à 6, caractérisé en ce que les nappes (N1 à N18) d'une même couche n'ont pas toutes le même motif de dépose des fils.

8. Procédé suivant l'une des revendications 1 à 7, caractérisé en ce qu'entre chaque couche est effectué un bobinage conventionnel.

9. Procédé suivant l'une des revendications 1 à 8, caractérisé en ce que la dépose de la ou des couches est complétée par un piquage introduisant des fils suivant une troisième direction.

10. Dispositif pour la mise en oeuvre du procédé selon l'une des revendications 1 à 7, caractérisé en ce qu'il est constitué d'une série d'aiguilles ou analogues, implantées en saillie sur la surface à revêtir (1), le long dudit cercle de référence (R), à égale distance les unes des autres, et définissant lesdits points de départ (Nd) et d'arrivée (Na) entre lesquels le fil, ou l'ensemble de fils, est, à l'aide d'une machine de bobinage de type connu, déposé suivant une trajectoire sensiblement géodésique sur la surface (1).

11. Dispositif suivant la revendication 10, caractérisé en ce que les aiguilles sont fusibles.

12. Structure comportant au moins une surface hémisphérique revêtue conformément au procédé selon l'une des revendications 1 à 9.

13. Structure selon la revendication 12, caractérisée en ce qu'elle comprend une virole cylindrique et deux fonds d'extrémité hémisphérique dont, l'un, est muni d'un orifice d'accès et, l'autre, comporte une zone morte non revêtue correspondant audit orifice.

## Claims

1. Method of depositing fibres on a convex axisymmetrical surface, in particular hemispherical (1), provided with a circular hole or dead area (4), centred on the pole (3), characterised in that:
- a so called reference circle (R) is defined, parallel to the outer edge (2) of the surface and situated at a given distance (d) from the plane of the said edge,
- a regular succession of points is defined on the said reference circle (R),
- the fibre, or set of fibres, is presented following a first substantially geodesic path (F1d) on the said surface, from the said outer edge (2) as far as a first point on the said reference circle (R), referred to as the starting point (N1d),
- the fibre is deposited, as from the said starting point (N1d), as far as a second point on the said reference circle (R), referred to as the arrival point (N1a), following a second substantially geodesic path (F1g),
- the fibre is deposited beyond the said arrival point (N1a), as far as the said outer edge (2), following a third substantially geodesic path (F1a),
- the same process of deposition is reproduced, passing through a second starting point (N2d) on the said circle (R) and through a second arrival point (N2a),
- such a deposition is repeated to the maximum extent, as many times as it is possible to do it without crossing, at least in the area close to the said hole or dead area (4), the deposited fibres (F1g to F4g), so as to deposit a set of fibres referred to as a ply (N1), and then
- the same process of depositing a ply is repeated by successive offsetting until each point on the said reference circle (R) is, at the same time and only one time, a starting point and an arrival point, so as to obtain a layer, and
- if necessary, the above process is recommenced until the desired thickness is obtained.

2. Method according to Claim 1, characterised in that, during the deposition of a ply (N1), the fibres (F1g to F4g) are disposed on each side of the hole or dead area (4).

3. Method according to Claim 1, characterised in that, during the deposition of a ply, the fibres are disposed on the same side of the hole or dead area (4).

4. Method according to one of Claims 1 to 3, characterised in that the starting points of each ply (N1 to N18) of a layer are taken from a group of successive points along the said reference circle (R), the said starting points being chosen, inside the group, in any order.

5. Method according to Claim 4, characterised in that, from one layer to the next, the starting point (N1d) of the first ply (N1) is offset angularly with respect to that of the first ply of the previous layer.

6. Method according to Claim 4, characterised in that, from one layer to the next, the starting point (N1d) of the first ply (N1) is the same as that of the first ply of the previous layer and the plies of the following layer are deposited in the direction opposite to the

7. deposition of the plies of the previous layer. 7. Method according to of one of Claims 1 to 6, characterised in that the plies (N1 to N18) of the same layer do not all have the same fibre deposition pattern.

8. Method according to one of Claims 1 to 7, characterised in that, between each layer, a conventional winding is effected.

9. Method according to one of Claims 1 to 8, characterised in that the deposition of the layer or layers is supplemented by a stitching introducing fibres in a third direction.

10. Device for implementing the method according to one of Claims 1 to 7, characterised in that it consists of a series of needles or the like, located so as to project on the surface to be covered (1), along the said reference circle (R), at an equal distance from each other, and defining the said starting (Nd) and arrival (Na) points and between which the fibre or set of fibres, is, by means of a winding machine of a known type, deposited in a substantially geodesic path on the surface (1).

11. Device according to Claim 10, characterised in that the needles are meltable.

12. Structure having at least one hemispherical surface covered in accordance with the method according to one of Claims 1 to 9.

13. Structure according to Claim 12, characterised in that it comprises a cylindrical collar and two hemispherial end bases, one of which is provided with an access orifice and the other one of which has an uncovered dead area corresponding to the said orifice.

## Patentansprüche

1. Verfahren zur Filamentablagerung auf einer achssymmetrischen konvexen, insbesondere halbkugeligen Fläche (1), die mit einer kreisförmigen, im Pol zentrierten Öffnung oder Totzone (4) versehen ist, dadurch gekennzeichnet, daß
- man einen Kreis (R), als Bezugskreis bezeichnet, parallel zum Außenrand (2) der Fläche und in einem vorbestimmten Abstand zur Randebene definiert,
- man auf dem Bezugskreis (R) eine regelmäßige Folge von Punkten definiert,
- man das Filament oder eine Einheit von Filamenten gemäß einer ersten im wesentlichen geodätischen Trajektorie (F1d) auf der Fläche ausgehend von dem Außenrand (2) bis zu einem ersten Punkt des Bezugskreises (R), bezeichnet als Ausgangspunkt (N1d), präsentiert,
- man das Filament ausgehend von dem Ausgangspunkt (N1d) bis zu einem zweiten Punkt des Bezugskreises (R), als Ankunftspunkt (N1a) bezeichnet, gemäß einer zweiten im wesentlichen geodätischen Trajektorie (F1g) ablegt,
- man das Filament über den Ankunftspunkt (N1a) hinaus bis zum Außenrand (2) gemäß einer dritten im wesentlichen geodätischen Trajektorie (F1a) ablegt,
- man den gleichen Ablegevorgang wiederholt, indem ein zweiter Ausgangspunkt (N2d) auf dem Kreis (R) und ein zweiter Ankunftspunkt (N2a) passiert werden,
- man ein derartiges Ablegen bis maximal soviele Male wiederholt, daß es möglich ist, die abgelegten Filamente (F1g bis F4g) wenigstens im Bereich benachbart zu der Öffnung oder Totzone (4) ohne sich zu kreuzen zu lassen, so daß eine Gesamtheit von Filamenten, Schale (N1) genannt, abgelegt wird, wonach
- man den gleichen Ablegevorgang der Schale unter aufeinanderfolgender Verschiebung wiederholt, bis jeder Punkt des Bezugskreises (R) einmal und ein einzigen Mal ein Ausgangs- und ein Ankunftspunkt wird, um eine Schicht zu erhalten, und
- man gegebenenfalls das vorstehend beschriebene Verfahren bis zum Erhalt der gewünschten Schichtdicke erneut beginnt.

2. Verfahren nach Anspruch 1, dadurch gekennzeichnet, daß im Verlauf des Ablegens einer Schale (N1) die Filamente (F1g bis F4g) beiderseits der Öffnung oder Totzone (4) abgelegt werden.

3. Verfahren nach Anspruch 1, dadurch gekennzeichnet, daß im Verlauf des Ablegens einer Schale die Filamente auf der gleichen Seite der Öffnung oder Totzone (4) abgelegt werden.

4. Verfahren nach einem der Ansprüche 1 bis 3, dadurch gekennzeichnet, daß die Ausgangspunkte jeder Schale (N1 bis N18) einer Schicht aus einer Gruppe von aufeinanderfolgenden Punkten längs des Bezugskreises (R) genommen werden, wobei die Ausgangspunkte innerhalb der Gruppe in irgendeiner Ordnung gewählt werden.

5. Verfahren nach Anspruch 4, dadurch gekennzeichnet, daß von einer Schicht zur anderen der Ausgangspunkt (N1d) der ersten Schale (N1) winkelmäßig in bezug auf denjenigen der ersten Schale der vorhergehenden Schicht verschoben ist.

6. Verfahren nach Anspruch 4, dadurch gekennzeichnet, daß von einer Schicht zur anderen der Ausgangspunkt (N1d) der ersten Schale (N1) der gleiche wie denjenige der ersten Schale der vorhergehenden Schicht ist und die Schalen der folgenden Schicht in umgekehrten Ablagesinn der Schalen der vorhergehenden Schicht abgelegt werden.

7. Verfahren nach einem der Ansprüche 1 bis 6, dadurch gekennzeichnet, daß die Schalen (N1 bis N8) einer gleichen Schicht nicht alle das gleiche Filamentablagemuster aufweisen.

8. Verfahren nach einem der Ansprüche 1 bis 7, dadurch gekennzeichnet, daß zwischen jeder Schicht eine konventionelle Bewicklung vorgenommen wird.

9. Verfahren nach einem der Ansprüche 1 bis 8, dadurch gekennzeichnet, daß das Ablagen der Schicht(en) durch ein Heften vervollständigt wird, bei dem Filamente gemäß einer dritten Richtung eingeführt werden.

10. Vorrichtung zur Durchführung des Verfahrens gemäß einem der Ansprüche 1 bis 7, dadurch gekennzeichnet, daß sie durch eine Reihe von Nadeln od.dgl. gebildet wird, die bezüglich einer zu bedeckenden Fläche (1) längs des Bezugskreises (R) vorstehend und in gleichem Abstand zueinander angeordnet sind und die Ausgangs- und Ankunftspunkte (Nd, Na) definieren, zwischen denen das Filament oder die Einheit von Filamenten mit Hilfe einer Wickelmaschine bekannten Typs gemäß einer im wesentlichen geodätischen Trajektorie auf der Fläche (1) abgelegt wird.

11. Vorrichtung nach Anspruch 10, dadurch gekennzeichnet, daß die Nadeln schmelzbar sind.

12. Struktur umfassend wenigstens eine halbkugelige Fläche, die gemäß dem Verfahren nach einem der Ansprüche 1 bis 9 bedeckt ist.

13. Struktur nach Anspruch 12, dadurch gekennzeichnet, daß sie einen zylindrischen Ring und zwei halbkugelige endseitige Böden aufweist, von denen einer mit einer Zugangsöffnung versehen ist und der andere eine nicht bedeckte Totzone korrespondierend zu der Öffnung umfaßt.
